# EUROPEAN PATENT APPLICATION

(11) **EP 1 027 913 A1**
(43) Date of publication of application: **16.08.2000**
(21) Application number: 99926941.8
(22) Date of filing: 06.07.1999
(51) Int. Cl.: B01D 53/00, B01D 53/04, B01D 53/26, B01D 53/86

(54) **METHOD AND APPARATUS FOR PRODUCING HIGHLY CLEAN DRY AIR**

(30) Priority: 07.07.1998 JP 19208698; 07.07.1998 JP 19209098; 07.07.1998 JP 19209298; 07.07.1998 JP 19209598
(71) Applicant: Nippon Sanso Corporation, Tokyo 105-0003 (JP)
(72) Inventor: NAKAJIMA, Daiji, Minato-ku, Tokyo 105-0003 (JP); HONDA, Hideyuki, Minato-ku, Tokyo 105-0003 (JP); ISHIHARA, Yoshio, Minato-ku, Tokyo 105-0003 (JP); HIROKAWA, Masaki, Minato-ku, Tokyo 105-0003 (JP)
(74) Representative: TER MEER STEINMEISTER & PARTNER GbR
(86) International application number: JP9903629
(87) International publication number: WO0001467

(57) **Abstract**

A process for producing clean dry air including a compression step for compressing raw air, a catalytic purification step for reacting hydrogen and carbon monoxide with oxygen and an adsorptive purification step for removing moisture and carbon dioxide; wherein the catalytic purification step is carried out at a space velocity of 3000 h⁻¹ or less; the adsorptive purification step is carried out by passing the raw air through a drying agent bed and an impurity gas removing agent bed packed in this order in the raw air flow direction; space velocity of the drying agent bed and that of the impurity gas removing agent bed being 11000 h⁻¹ or less and 6000 h⁻¹ or less respectively.

## Description

### TECHNICAL FIELD

The present invention relates to a process and an apparatus for producing clean dry air, particularly to a process and an apparatus for producing clean dry air which minimizes not only moisture but also other contaminants contained in dry air to be used in the industrial process such as production processes in semiconductor manufacturing plants and liquid crystal manufacturing plants before it is supplied to such processes.

More specifically, the present invention relates to a process and an apparatus for producing clean dry air employable, for example, not only in the wafer (thin plate board or board) treating process in semiconductor manufacturing plants but also as a gas for protecting wafers in such occasions that wafers are brought into contact with the ambient air, for example, during storage and transportation.

### BACKGROUND ART

Dry air has conventionally been employed in the industrial processes in semiconductor manufacturing plants, liquid crystal manufacturing plants, etc. mainly for the purpose of machine driving, valve operation, transportation of chemical liquids, pure water tank purging and the like. Such dry air has been produced by compressing the atmospheric air to a predetermined pressure using a compressor, and then removing as necessary particles using a filter, followed by removal of moisture by adsorptive separation or membrane separation.

Specifications of dry air conventionally used are:
pressure: 0.5 to 0.7 MPa; dew point: -70°C; flow rate: 1500 to 3000 Nm³/h (Nm³/h means the volume in the standard condition (0°C, 1 atm)), and users install the above equipment in their own plants and make independent operation of them.

Meanwhile, products to be obtained in the manufacturing process of semiconductor manufacturing plants, liquid crystal producing plants, etc., for example, wafers are exposed to the atmospheric air, if protecting measures are taken insufficiently during transportation between the machines, storage, etc., impurity contents deposit on the surface of the wafers under the influence of moisture, oxygen, hydrocarbons, etc. contained in the atmospheric air, to be causative of various deficiencies and increase in the cost, for example, deterioration of characteristics and increase in the number of cleaning steps. There is given an example where an easy box is fabricated for carrying out nitrogen gas purging in order to avoid exposure of wafers to atmospheric air.

However, production techniques in semiconductor manufacturing plants, liquid crystal manufacturing plants, etc. are required to carry out strict quality control and also to give high yield more economically and with high efficiency under competitive pricing. Particularly, the measures for protection of wafers in the manufacturing processes in semiconductor manufacturing plants, liquid crystal manufacturing plants, etc. are appreciated as significant matters on the standpoint of maintenance of product characteristics and reduction of cost. Clean dry air is needed considerably as the carrier gas for protecting wafers. Strict specifications are required in the clean dry air to be supplied as the carrier gas in semiconductor manufacturing plants and liquid crystal manufacturing plants, such that impurities contained in air, for example, moisture, carbon monoxide, carbon dioxide and hydrogen be removed to concentrations 10 ppb or lower respectively. In order to satisfy such requirement, strict values should be imposed on the conditions of purification in each step of purification methods.

### DISCLOSURE OF THE INVENTION

It is an objective of the present invention to provide a production process and an apparatus for supplying clean dry air efficiently and stably. It is another objective of the present invention to supply clean dry air economically depending on the pressure required. It is a further objective of the present invention to provide a process and an apparatus for producing clean dry air capable of circulating clean dry air to be exhausted from air-consuming equipments economically and efficiently while preventing pollution of it.

The process for producing clean dry air according to the present invention includes a compressing step for compressing raw air; a catalytic purification step for reacting hydrogen and carbon monoxide contained in the raw air with oxygen; and an adsorptive purification step for removing impurities including moisture, carbon dioxide, etc. contained in the raw air; wherein the catalytic purification step is carried out at a space velocity of 3000 h⁻¹ or less; the adsorptive purification step is carried out by passing the raw air through a drying agent bed and an impurity gas removing agent bed packed in this order in the raw air flow direction; space velocity of the drying agent bed and that of the impurity gas removing agent bed are 11000 h⁻¹ or less and 6000 h⁻¹ or less respectively.

The apparatus for producing clean dry air according to the present invention contains a compressor for compressing raw air; a catalytic purification unit for reacting hydrogen and carbon monoxide contained in the raw air with oxygen; and an adsorptive purification unit for removing impurities contained in the raw air including moisture and carbon dioxide; the catalytic purification unit being packed with a metal catalyst containing as a major component a metal or a combination of metals selected from Pd, Pt, Au, Rh, Ru, Fe, Cr, Ni, Co, Mn, Cu, Sn and Zn, or an alloy formed by combining some of such metals; the adsorptive purification unit contains a drying agent bed formed by packing a drying agent bed containing activated alumina and/or silica gel, and an impurity gas removing agent bed formed by packing a synthetic zeolite, these two beds being multilayered in this order from the inlet side.

According to the present invention, clean dry air needed in semiconductor manufacturing plants, liquid crystal manufacturing plants, etc. can be supplied stably and economically. This clean dry air is purified to have a total impurity content on the 10 ppb level by reducing hydrogen, carbon monoxide, moisture, carbon dioxide, etc. to 10 ppb or less respectively.

Further, according to the process of the present invention, the adsorptive purification step is carried out using at least two adsorbers interchangeably with a switching time of 4 to 12 hours, at a regeneration temperature of 100°C or higher and with a regeneration gas ratio of 40 % or less.

The clean dry air gone through the adsorptive purification step is supplied as a product to an air-consuming equipment; whereas the clean dry air used in the equipment is recovered and boosted in the pressure to be combined with an air stream on the upstream side or downstream side of the compression step or with an air stream on the upstream side or downstream side of the adsorptive purification step. The clean dry air gone through the adsorptive purification step is expanded at least partly to effect further boosting of the pressure of the raw air after the compressing step with the energy of expansion.

The clean dry air gone through the adsorptive purification step is supplied as a product to an air-consuming equipment and is used there, and then the air is recovered and compressed or driven to be recycled to the air-consuming equipment utilizing the pressure of the clean dry air to be supplied afresh to the equipment. The clean dry air to be supplied afresh is expanded in a fan-driving expansion turbine; whereas the clean dry air recovered after use in the equipment is compressed by a fan driven by the expansion turbine. The clean dry air to be supplied afresh is partly supplied as a seal gas to sealing sections of the expansion turbine and the fan against the ambient air.

A pre-purification step for removing moisture in the raw air is interposed between the compressing step and the catalytic purification step, and a part of the air stream having gone through the pre-purification step is supplied as necessary as a dry air product. The pre-purification step is directed to adsorbing and removing moisture and is carried out at a space velocity of 12000 h⁻¹ or less.

The apparatus of the present invention has a metal catalyst, a drying agent and a synthetic zeolite packed in amounts of 0.33 ℓ or more per unit amount of air (Nm³), 0.09 ℓ or more per unit amount of air and 0.14 ℓ or more per unit amount of air, respectively.

Further, the apparatus of the present invention is provided with a heat exchanger for effecting heat exchange between the raw air withdrawn from the catalytic purification unit and at least a part of the clean dry air withdrawn from the adsorptive purification unit.

In addition, the apparatus of the present invention is provided with a booster-driving expansion turbine for expanding at least a part of the clean dry air withdrawn from the adsorptive purification unit and also a booster attached coaxially to the expansion turbine, for further boosting the pressure of the raw air compressed in the compressor. The apparatus is also provided with a heat exchanger for effecting heat exchange between the low-pressure clean dry air withdrawn from the expansion turbine and the raw air withdrawn from the catalytic purification unit. The apparatus is provided with a by-pass line having a by-pass valve between a charge passage and a discharge passage of the expansion turbine.

Furthermore, the apparatus of the present invention is provided with a fan-driving expansion turbine for expanding the clean dry air withdrawn from the adsorptive purification unit and supplying the expanded clean dry air as a low-pressure product to an air-consuming equipment and also with a fan attached coaxially to the turbine, for compressing the clean dry air used in the air-consuming equipment and recovered therefrom and recycling the resulting air to the air-consuming equipment.

The apparatus of the present invention is provided with a pre-purification unit for removing moisture contained in the raw air, interposed between the compressor and the catalytic purification unit. As the pre-purification unit, a membrane separator is used or is packed with at least one kind selected from alumina gel, silica gel and zeolite.

### BRIEF DESCRIPTION OF THE DRAWINGS

Fig. 1 is a system diagram showing a process and an apparatus for producing clean dry air according to a first embodiment of the present invention;
Fig. 2 is a system diagram showing a process and an apparatus for producing clean dry air according to a second embodiment of the present invention;
Fig. 3 is a system diagram showing a process and an apparatus for producing clean dry air according to a third embodiment of the present invention;
Fig. 4 is a system diagram showing another embodiments of the fan-driving expansion turbine and a fan to be employed in the third embodiment;
Fig. 5 is a system diagram showing another embodiments of the fan-driving expansion turbine and a fan to be employed in the third embodiment; and
Fig. 6 is a system diagram showing a process and an apparatus for producing clean dry air according to a fourth embodiment of the present invention.

### BEST MODE FOR CARRYING OUT THE INVENTION

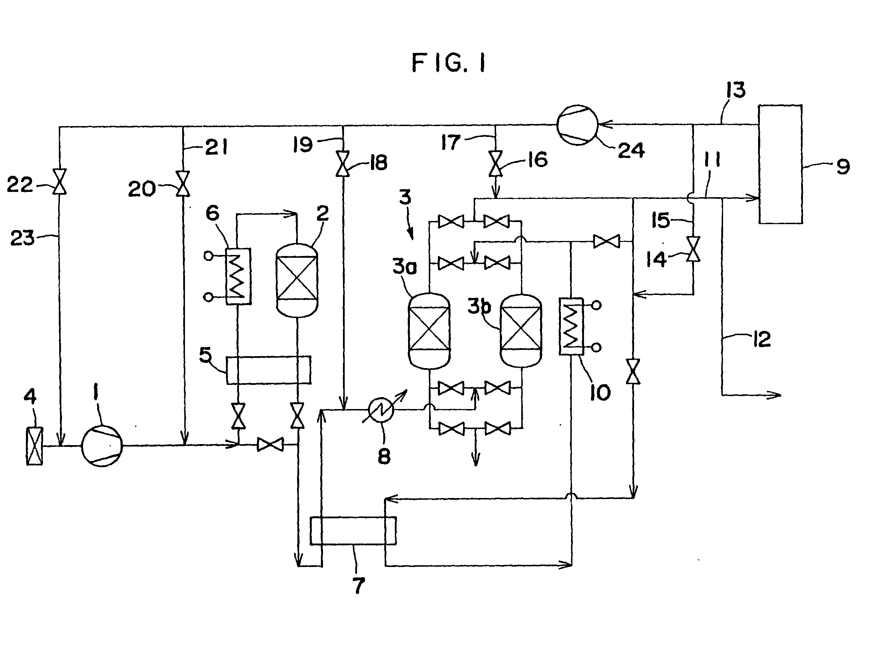

A first embodiment of the present invention will be described referring to Fig. 1. The apparatus for producing clean dry air shown in Fig. 1 is provided with a compressor 1 for compressing raw air, a catalytic purification unit 2 for effecting reaction of hydrogen and carbon monoxide contained in the raw air with oxygen and an adsorptive purification unit 3 for removing impurities such as moisture and carbon dioxide contained in the raw air.

The raw air is passed through a filter 4 so as to remove particles therefrom and then compressed to a predetermined pressure in the compressor 1. The thus compressed raw air is heated in a first heat exchanger 5 and a first heater 6 and then introduced to the catalytic purification unit 2, where the hydrogen and carbon monoxide contained in the compressed raw air react with the oxygen also contained therein to form water and carbon dioxide. The compressed raw air withdrawn from the catalytic purification unit 2 is cooled through the first heat exchanger 5, a second heat exchanger 7 and a cooling unit 8 and then introduced to the adsorptive purification unit 3.

In the adsorptive purification unit 3, the water and carbon dioxide formed by the reaction with the oxygen are adsorbed and removed together with the impurities including moisture and carbon dioxide contained originally in the raw air. Thus, there is obtained clean dry air having carbon monoxide, hydrogen, carbon dioxide and water contents which are removed to 10 ppb or lower respectively. The resulting clean dry air is supplied as a product to an air-consuming equipment 9.

The compressor 1 takes the atmospheric air into it and compresses the air to a necessary pressure, and a compressor of desired type can be used depending on the compression pressure and flow rate. For example, in the case where the necessary pressure and the flow rate are 0.75 MPa and 5000 Nm³/h respectively, a turbo compressor can be used.

The catalytic purification unit 2 consists essentially of a column and a metal catalyst packed therein. As the metal catalyst, metals such as Pd, Pt, Au, Rh, Ru, Fe, Cr, Ni, Co, Mn, Cu, Sn, Zn and the like may be used singly or as a combination of two or more of them as major components, or in the form of metal alloy formed by combining some of such metals as a major component.

Of such metal catalysts, for example, when a Pd catalyst is used as a noble metal catalyst, the Pd catalyst is packed in the unit 2 in an amount of 0.33 ℓ or more per unit amount of air or per 1 Nm³ of raw air, and the space velocity is set to 3000 h⁻¹ or less, preferably 2000 to 3000 h⁻¹. Thus, hydrogen and carbon monoxide contained in the raw air can be oxidized by the catalytic reaction into water and carbon dioxide to reduce to 10 ppb or less, respectively. Here, if the space velocity is higher than 3000 h⁻¹, the impurity removing efficiency can drop; whereas a very low space velocity leads to drop in the quantity of air to be treated or increase in the amount of catalyst, uneconomically.

The removal of hydrogen and carbon monoxide by the catalytic reaction as described above can be carried out at a temperature of 30 to 150°C depending on the kind of catalyst. If trace of hydrocarbons such as methane, ethane and propane are to be removed simultaneously by the catalytic reaction, the reaction can be carried out at a higher temperature of about 350°C. The first heat exchanger 5 and the first heater 6 are incorporated as means for increasing the temperature of the compressed raw air to the catalytic reaction temperature described above. That is, when the catalytic reaction temperature is higher than that of the heat of compression in the compressor 1, the inlet air and the outlet air of the catalytic purification unit 2 are subjected to heat exchange with each other in the first heat exchanger 5 to recover the heat of the high-temperature air obtained after completion of the reaction. If the temperature of the compressed raw air is still insufficient, the raw air is adapted to be heated by the first heater 6, thus improving thermal efficiency.

The cooling unit 8 is directed to cooling of the inlet air of the adsorptive purification unit 3 to 5 to 10°C. This cooling unit 8 is formed by combining, for example, a water cooler and a drain separator. This cooling unit 8 has a function of reducing the amount of moisture intruding into the adsorptive purification unit 3 by cooling the raw air after completion of the catalytic reaction to effect condensation of the moisture and removing the resulting condensate, thus improving running efficiency of the adsorptive purification unit 3. Here, the lower the raw air cooling temperature is, the less becomes the water content to be able to reduce the load to be applied to the adsorptive purification unit 3. However, the cooling temperature may be within the above temperature range (5 to 10°C), and the cooling method is not particularly limited.

The adsorptive purification unit 3 has a vessel packed with an adsorbent for adsorbing and removing moisture and carbon dioxide. The adsorptive purification unit 3 contains a drying agent bed formed by packing a drying agent (moisture removing agent) containing activated alumina and/or silica gel and an impurity gas removing agent bed formed by packing a synthetic zeolite. These two beds are multilayered in this order from the raw air inlet side. As the synthetic zeolite, Na-X type, Ca-X type, Li-X type, Na-A type and Ca-A type may be used singly or as a combination of two or more of them. Incidentally, the vessel of the adsorptive purification unit 3 may be packed thoroughly with a suitable adsorbent or with a mixture of suitable adsorbents.

For example, the adsorptive purification unit 3 is packed with alumina gel as a drying agent at the inlet near the bottom of the vessel, while an Na-X type synthetic zeolite is packed as an impurity gas removing agent on the outlet side of the vessel, and thus the moisture and carbon dioxide contained originally in the raw air can be adsorbed and removed efficiently together with the moisture and carbon dioxide formed by the reaction in the catalytic purification unit 2. Here, the packing ratio of the alumina gel to the synthetic zeolite is generally about 1 : 2 in terms of volume.

The space velocity of the drying agent bed is 11000 h⁻¹ or less, preferably 9000 to 11000 h⁻¹. The space velocity of the impurity gas removing agent bed is 6000 h⁻¹ or less, preferably 4000 to 6000 h⁻¹. Thus, moisture and carbon dioxide can be removed to concentrations of 10 ppb or less respectively. Here, if the space velocity values of these two beds are higher than the specified values respectively, the impurity removing efficiency can be lowered; whereas if they are lower than the specified values respectively, they are causative of reduction in the quantity of raw air to be treated or increase in the amount of adsorbent, uneconomically.

Meanwhile, referring to piping through which the clean dry air flows, locating on the downstream side of the adsorptive purification unit 3, stainless steel pipes are suitably used. Desirably, stainless steel pipes having mirror-polished inner surfaces obtained by electrolytic polishing treatment are used. It should be noted here that while the catalytic purification unit 2 and the adsorptive purification unit 3 were installed separately in this embodiment, these two units 2 and 3 may be integrated into one unit having both a catalyst and an adsorbent packed in one container.

The adsorptive purification unit 3 contains two adsorption vessels 3a and 3b each packed with the adsorbent. These adsorption vessels 3a and 3b are operated interchangeably such that one vessel 3a carries out an adsorption step, when the other vessel 3b is carrying out a regeneration step or vice versa and that purification treatment of raw air can be performed continuously.

The regeneration step to be carried out in these adsorption vessels includes a heat-regeneration sub-step and a cooling sub-step. A part of purified gas (clean dry air product) having gone through the adsorption step is basically used both as a heat-regeneration gas and a cooling gas to be employed in the heat-regeneration sub-step and the cooling sub-step respectively. However, those gases containing no or very little impurities such as moisture, carbon dioxide, hydrogen and carbon monoxide, for example, the clean dry air used in an air-consuming equipment 9 or a waste gas from an air separation plant (not shown) can be utilized, and thus yield of the clean dry air product can be improved. The air-consuming equipment 9 is, for example, those which manufacture semiconductor integrated circuits, liquid crystal panels and solar cell panels.

While the regeneration temperature in the heat-regeneration sub-step varies depending on the conditions including the heat-regeneration period and the quantity of the heat-regeneration gas, it is usually 100 to 150°C. The apparatus of this embodiment is provided with the second heat exchanger 7 and a second heater 10, as means for heating the heat-regeneration gas to such a temperature. The second heat exchanger 7 carries out exchange of heat between the outlet air of the catalytic purification unit 2 passed through the first heat exchanger 5 and the gas to be used as the heat-regeneration gas so as to recover the quantity of heat of the outlet air and heat the heat-regeneration gas. The second heater 10 is used for heating the heat-regeneration gas when the temperature of the gas is not elevated to a predetermined level by the heat exchange treatment in the second heat exchanger 7.

Incidentally, the heat-regeneration gas may be adapted to be heated first through the first heat exchanger 5 and then through the second heat exchanger 7. In the case where the heat-regeneration gas can be heated to the predetermined temperature in the second heat exchanger 7, the second heater 10 can be omitted. Further, the second heat exchanger 7 can be omitted, and the heat-regeneration gas can be heated by the second heater 10 only. The cooling gas to be used in the cooling sub-step is not fed through the second heat exchanger 7 or the second heater 10 but is introduced directly to the adsorption column.

As described above, when raw air is purified by carrying out the adsorption step and the regeneration step alternately by operating these two adsorption vessels 3a and 3b interchangeably, the vessels 3a and 3b can be operated efficiently by setting the switching time of these two steps to 4 to 12 hours, preferably 6 to 10 hours; the regeneration temperature at 100°C or higher, preferably 120°C or higher; and the regeneration gas ratio in 40 % or less, preferably 20 % or less.

Incidentally, when a gas from other processes such as the used clean dry air and a waste gas from the air separation plant is utilized for the regeneration, the balance among the conditions for operating the process should be taken into consideration.

The clean dry air purified in the adsorptive purification unit 3 is supplied through a supply passage 11 to an air-consuming equipment 9 in a semiconductor manufacturing plant, a high-density recording medium manufacturing plant, a liquid crystal manufacturing plant and the like. Further, a part of the clean dry air can be supplied as a raw material of the air separation plant (not shown) by forming a branch passage 12 in the supply passage 11.

Further, in this embodiment, the clean dry air used in the air-consuming equipment 9 is adapted to be recovered through a recovering passage 13. Depending on the degree of contamination or the amount, the thus recovered clean dry air can be supplied through a regeneration gas passage 15 having a valve 14 to be used as a regeneration gas for the adsorptive purification unit 3, or through a first mixing passage 17 having a valve 16 to be combined with the stream of clean dry air on the downstream side of the adsorptive purification unit 3, or through a second mixing passage 19 having a valve 18 to be combined with the stream of raw air on the upstream side of the unit 3, or through a third mixing passage 21 having a valve 20 to be combined with the stream of raw air on the downstream side of the compressor 1, or through a fourth mixing passage 23 having a valve 22 to be combined with the stream of raw air on the upstream side of the compressor 1.

This increases the efficiency of utilizing clean dry air and achieves downsizing of the clean dry air producing apparatus and reduction in the running cost. Meanwhile, when the clean dry air is recovered for recycling, the recovered air is compressed by a recovering compressor 24 to conform to the pressure of the gas to be combined therewith.

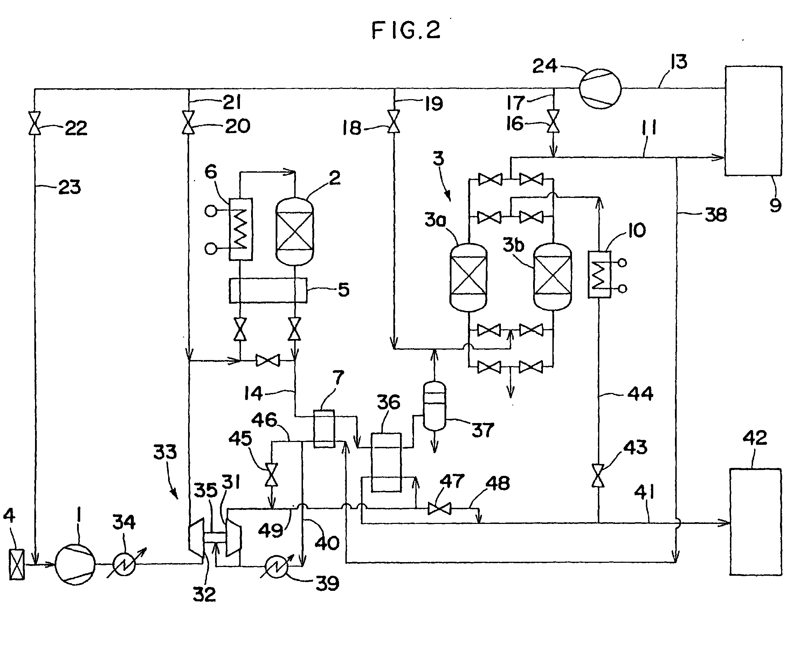

Next, a second embodiment of the present invention will be described referring to Fig. 2. It should be noted here that those elements which have the same functions as those shown in Fig. 1 are affixed with the common reference numbers respectively, and detailed description of them will be omitted.

This apparatus for producing clean dry air is provided with a power recycling unit 33 containing an expansion turbine 31 for expanding at least a part of the clean dry air withdrawn from the adsorptive, purification unit 3 and a booster 32 attached coaxially to the turbine 31. The booster 32 is driven by the energy of expansion occurring in the expansion turbine 31 to boost further the pressure of raw air having gone through the compression step.

The raw air having passed the filter 4 is compressed by the compressor 1 to a predetermined pressure and then cooled by an after-cooler 34, and the resulting gas is introduced into the booster 32. The booster 32 boosts the pressure of the compressed raw air to a level suitable for the catalytic purification step, for example, to 0.46 MPa.

The booster 32 boosts the pressure of the raw air utilizing the pressure of the clean dry air withdrawn from the adsorptive purification unit 3. The expansion turbine 31 and the booster 32 are connected to each other by a single shaft 35 to constitute a coaxial structure. A gas bearing using a part of the clean dry air or a magnetic bearing is preferably employed as a bearing for the shaft 35. These bearings have small frictional resistance and can increase the power recycling effect, and they are also capable of sealing completely against contact with source of contaminant such as the ambient air, avoiding contamination of the clean dry air. Here, a rolling bearing, a metal bearing, etc. can be used as the bearing.

The air boosted in the booster 32 is introduced through the first heat exchanger 5 and the first heater 6 to the catalytic purification unit 2. Water and carbon dioxide formed in the unit 2 are cooled first together with the boosted air in the first heat exchanger 5 and then cooled successively in the second heat exchanger 7 and a third heat exchanger 36. After separation of the resulting condensate in a drain separator 37, the resulting air is introduced to the adsorptive separation unit 3. Incidentally, a cooling unit may, as necessary, be installed.

The water and carbon dioxide in the boosted air introduced to the adsorptive purification unit 3 are adsorbed and removed to 10 ppb or less respectively, and the resulting clean dry air is supplied through the supply passage 11 to the air-consuming equipment 9. The clean dry air recovered into the recovering passage 13 can be combined with the stream of boosted air on the downstream side of the booster 32 instead of the stream on the downstream side of the compressor 1 through the third mixing passage 21.

The clean dry air in the supply passage 11 is diverged partly to a branch passage 38 to be used as a regeneration gas for the adsorptive purification unit 3 and as a low-pressure product. The clean dry air in the branch passage 38 is heated in the second heat exchanger 7 by heat exchange with the hot boosted air withdrawn from the catalytic purification unit 2. The thus heated clean dry air withdrawn from the second heat exchanger 7 is introduced through a passage 40 having a water cooler 39 into the expansion turbine 31 where the air is expanded, and the power generated by the expansion is utilized as a force for driving the booster 32.

The thus expanded clean dry air having a low temperature and a low pressure is heated in the third heat exchanger 36 by heat exchange with the boosted air and is supplied through a low-pressure product supply passage 41 to a low-pressure product consuming equipment 42. Further, the above clean dry air is diverged from the low-pressure product supply passage 41 to a regeneration gas passage 44 having a valve 43 to be used as the regeneration gas for the adsorptive purification unit 3.

The outlet pressure of the booster-driving expansion turbine 31 is set depending on the pressure in the low-pressure product consuming equipment 42, for example, to 0.1 MPa. Incidentally, the external leakage occurring in the expansion turbine 31 should be desirably 1 x 10⁻⁹ Torr· L/s or less, particularly 1 x 10⁻¹¹ Torr·L/s or less.

Heating of the clean dry air in the second heat exchanger 7 can increase the inlet temperature of the expansion turbine 31 to improve the efficiency. Besides, utilization of the thermal energy of the heated air withdrawn from the catalytic purification unit 2 leads to effective utilization of energy. Here, as a stream of heat source for carrying out heat exchange with the high-pressure clean dry air in the second heat exchanger 7, the compressed air at the outlet of the compressor 1 and the like can be utilized instead of that described in this embodiment.

A part of the clean dry air withdrawn from the second heat exchanger 7 is diverged to a bypass 46 having a bypass valve 45 and is combined with the low-pressure clean dry air withdrawn from the expansion turbine 31. Meanwhile, a part of the low-pressure clean dry air before introduction into the third heat exchanger 36 is combined with the low-pressure clean dry air flowed through a passage 48 having a valve 47 and is heated in the third heat exchanger 36. Thus, the temperature of the low-pressure product to be supplied to the product-consuming equipment 42 can be adjusted suitably.

The quantity of heat exchange in the second heat exchanger 7, the flow rate in the bypass 46 and the quantity of cooling in the water cooler 39 are set such that the temperature of the low-pressure clean dry air, flowed through a confluent passage 49 and is introduced into the third heat exchanger 36, is 0°C or higher and as low as possible. That is, the temperature of the clean dry air to be introduced into the third heat exchanger 36 is controlled such that the moisture in the boosted air to be subjected to heat exchange therewith in the third heat exchanger 36 does not freeze.

The low-pressure clean dry air caused to have a low temperature by the expansion is warmed to the ambient temperature by heat exchange with the boosted air in the third heat exchanger 36, and this prevents dewing from occurring on the external wall surface of piping and the like present on the downstream side of the heat exchanger 36. Here, the flow rate of the low-pressure clean dry air to be supplied to the third heat exchanger 36 is adjusted by the valve 47.

As described above, boosting of the raw air can be carried out efficiently by arranging the power recycling unit 33 having the expansion turbine 31 and the booster 32, and the second and third heat exchangers 7 and 36 effectively, and thus power consumption in the compressor 1 can be reduced. In addition, not only the clean dry air but also a low-pressure clean dry air can be supplied simultaneously.

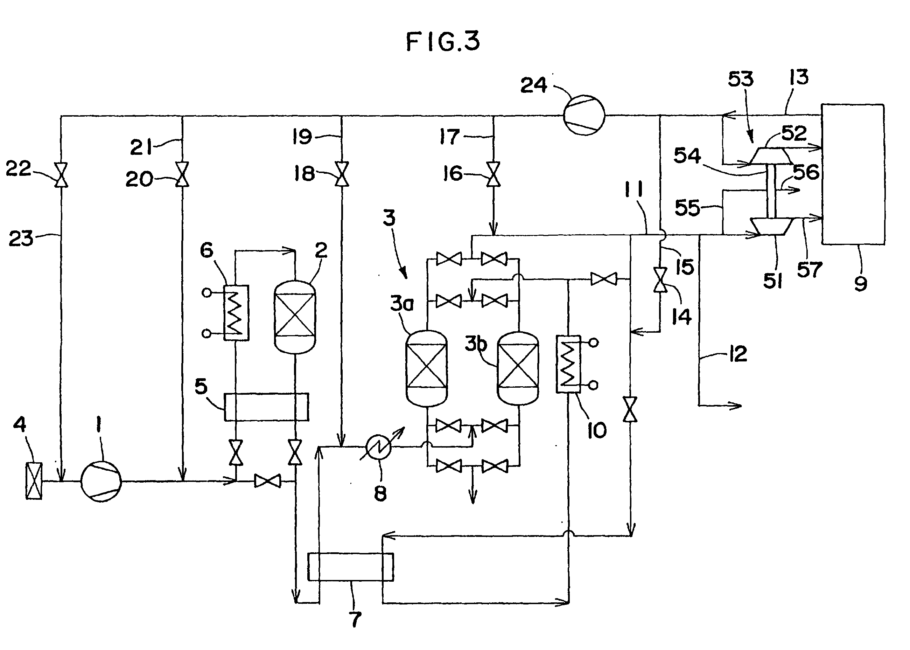

Next, a third embodiment of the present invention will be described referring to Fig. 3.

This apparatus for producing clean dry air is provided with a recycling system 53 containing an expansion turbine 51 for expanding the clean dry air withdrawn from the adsorptive purification unit 3 to a supply passage and a fan 52 attached coaxially to the turbine 51. The fan 52 is driven by the energy of expansion occurring in the expansion turbine 51 to compress a part of the used clean dry air recovered from the air-consuming equipment 9 into the recovering passage 13 and supply the compressed air to the equipment 9. The expansion turbine 51 depressurizes the clean dry air having a relatively high pressure to be supplied from the supply passage 11 to the air-consuming equipment 9 to the service pressure in the equipment 9.

The expansion turbine 51 and the fan 52 are connected directly to each other by a single shaft 54 to constitute a coaxial structure. A gas bearing or a magnetic bearing is employed as a bearing for the shaft 54. These bearings have small frictional resistance and high power recycling effect, and they are also capable of sealing completely against contact with sources of contamination such as the ambient air. While a sealing gas is employed in these bearings, the clean dry air diverged from the supply passage 11 into a seal gas passage 55 is used as the seal gas. Here, the used seal gas may be exhausted as such from a passage 56, or it may be combined with the expanded clean dry air flowing through a passage 57, and the resulting mixed gas may be supplied to the air-consuming equipment 9.

As described above, in this embodiment, since the clean dry air is depressurized in the fan-driving expansion turbine 51 before it is supplied to the air-consuming equipment 9, and since the energy of the power generated in the expansion turbine 51 drives the fan 52 for recycling to the equipment 9 the used clean dry air exhausted therefrom, there is no need of securing an extra power for driving the fan. Here, more than one recycling systems 53 can be installed depending on the quantity of clean dry air to be treated for recycling.

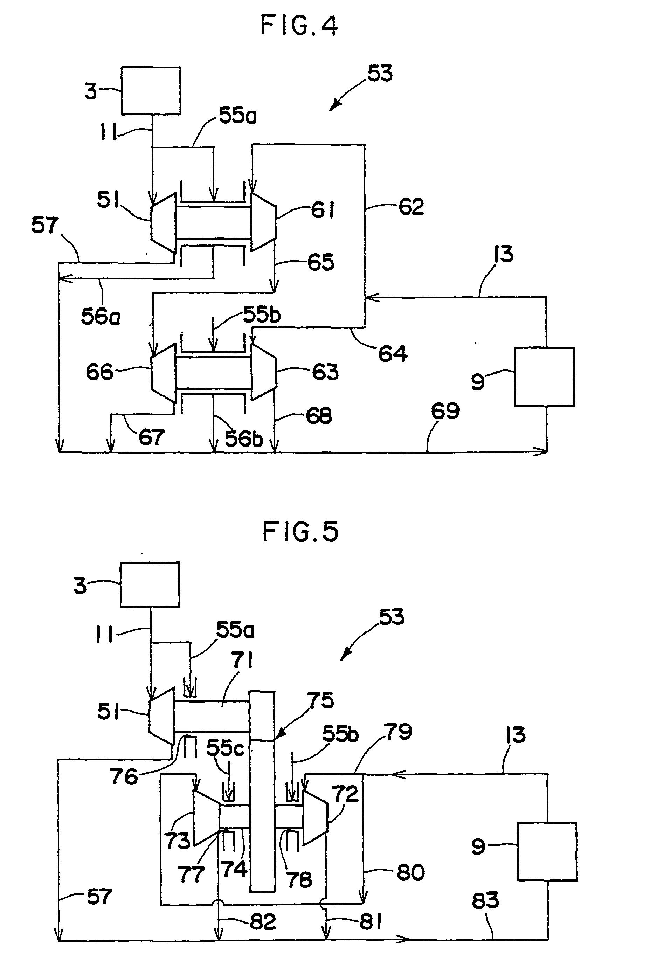

Fig. 4 is a system diagram showing the recycling system 53 according to another embodiment. This recycling system 53 is provided with two sets of coaxial expansion turbine and fan. Each expansion turbine 51 depressurizes the replenishing clean dry air flowing through the supply passage 11 to the service pressure in the air-consuming equipment 9, like the expansion turbine 51 shown in Fig. 3.

Meanwhile, the clean dry air used in the air-consuming equipment 9 and recovered into the recovering passage 13 for circulation is diverged into a passage 62 running toward a first fan 61 and another passage 64 running toward a second fan 63. The clean dry air diverged into the passage 62 is compressed by the first fan 61 driven by the expansion turbine 51 to a pressure higher than the service pressure in the air-consuming equipment 9, and the compressed air is introduced through a passage 65 into an expansion turbine 66. Meanwhile, the clean dry air diverged into the passage 64 is boosted by the second fan 63 driven by the expansion turbine 66 to a predetermined boost up pressure.

The clean dry air expanded by the expansion turbine 51 and withdrawn to the passage 57, the clean dry air for circulation withdrawn into a passage 67 after boosting by the first fan 61 and expansion by the expansion turbine 66 and the clean dry air boosted by the second fan 63 and withdrawn into the passage 68 are combined in a passage 69 under the same pressure, and the combined gas is supplied to the air-consuming equipment 9.

For example, the clean dry air to be supplied from the supply passage 11 under a pressure of 0.45 MPa is expanded by the expansion turbine 51 to several 100 mmAq. Meanwhile, the clean dry air in the passage 62 is boosted by the first fan 61 to about 0.07 MPa, followed by further expansion in the expansion turbine 66 to several 100 mmAq. Further, the clean dry air in the passage 64 is boosted by the second fan 63 to several 100 mmAq.

Further, bearings for the expansion turbines 51 and 66 and for fans 61 and 63 are of the same gas bearings or magnetic bearings as in Fig. 3. The clean dry air diverged from the supply passage 11 to seal gas passages 55a and 55b is supplied as the seal gas to each bearing. The used seal gas is combined with the clean dry air to be supplied through the passages 56a and 56b to the air-consuming equipment 9.

In the case of the coaxial structure as shown in Fig. 3, the vane revolution speed in the expansion turbine is equal to that of the fan, so that the gas quantity to be treated by the fan is limited. In the embodiment shown in Fig. 4, two sets of expansion turbine and tan are installed, so that the pressure energy of the replenishing clean dry air can be utilized effectively. Accordingly, the circulating clean dry air can be recycled in a large amount, e.g., in an amount of twice as much as that of the replenishing clean dry air. It should be noted here that when the replenishing clean dry air has a high pressure, the air can be expanded stepwise by a plurality of expansion turbines to drive fans respectively in each step.

Fig. 5 is a system diagram showing the recycling system 53 according to another embodiment. In this recycling system 53, a shaft 71 of the expansion turbine 51 for expanding the replenishing clean dry air and a shaft 74 of fans 72 and 73 for boosting the circulating clean dry air are connected to each other by a change gear 75. That is, the power generated by the expansion turbine 51 is transmitted through the change gear 75 to the fans 72 and 73. Thus, two fans 72 and 73 can be rotated at a desired revolution speed by one expansion turbine 51. Use of such change gear system enables installation of an optimum number of fans of optimum shape and optimum performance depending on the quantity of circulating clean dry air and on the boost up pressure, and thus a large amount of circulating clean dry air can be boosted up in the most efficient conditions.

Since the change gear 75 is used in the embodiment shown in Fig. 5, sealing sections 76, 77 and 78 sealing against the ambient air in the expansion turbine 51 and in the fans 72 and 73 each have a labyrinth structure. To these sealing sections 76, 77 and 78 is supplied the clean dry air diverged from the supply passage 11 into seal gas passages 55a, 55b and 55c respectively. A well-known structure can be employed as the labyrinth structure of the sealing sections, so that detailed description and illustration of it will be omitted.

For example, the replenishing clean dry air supplied under a pressure of 0.45 MPa from the supply passage 11 is expanded to several 100 mmAq in the expansion turbine 51 and then withdrawn to the passage 57. The circulating clean dry air exhausted from the air-consuming equipment 9 into the recovering passage 13 is diverged into passages 79 and 80. The diverged portions of the circulating clean dry air are pressurized by the fans 72 and 73 to several 100 mmAq and are withdrawn to passages 81 and 82, respectively, and are combined with the replenishing clean dry air in the passage 57 to be supplied through a passage 83 to the equipment 9.

In each of the embodiments shown in Figs. 3 to 5, the replenishing clean dry air was used as the seal gas, so that the inside of the system can be isolated fully from other systems to be substantially free from contamination. Further, the clean dry air having a low pressure after utilization as the seal gas can be utilized effectively by supplying it together with the replenishing clean dry air to the air-consuming equipment 9. However, in the case where the replenishing clean dry air has an unsuitably too low pressure to be used as the seal gas, other suitable gases can be employed.

Meanwhile in each of the embodiments shown in Figs. 4 and 5, the expanded replenishing clean dry air and the boosted circulating clean dry air were combined and supplied to the air-consuming equipment 9. However, the air can be supplied to different sections of the equipment 9 depending on the situation thereof. Further, the specified pressure of the circulating clean dry air can be set suitably depending on the conditions including the constitution of the equipment 9 and the length of the piping, and the pressure of the replenishing clean dry air can also be set arbitrarily.

In each of the embodiments shown in Figs. 3 to 5, while a combination of an expansion turbine and a fan was employed, it is also possible to constitute such that the used clean dry air from the recovering passage 13 is recycled using an ejector utilizing the clean dry air having a relatively high pressure to be supplied from the supply passage 11 as a drive gas.

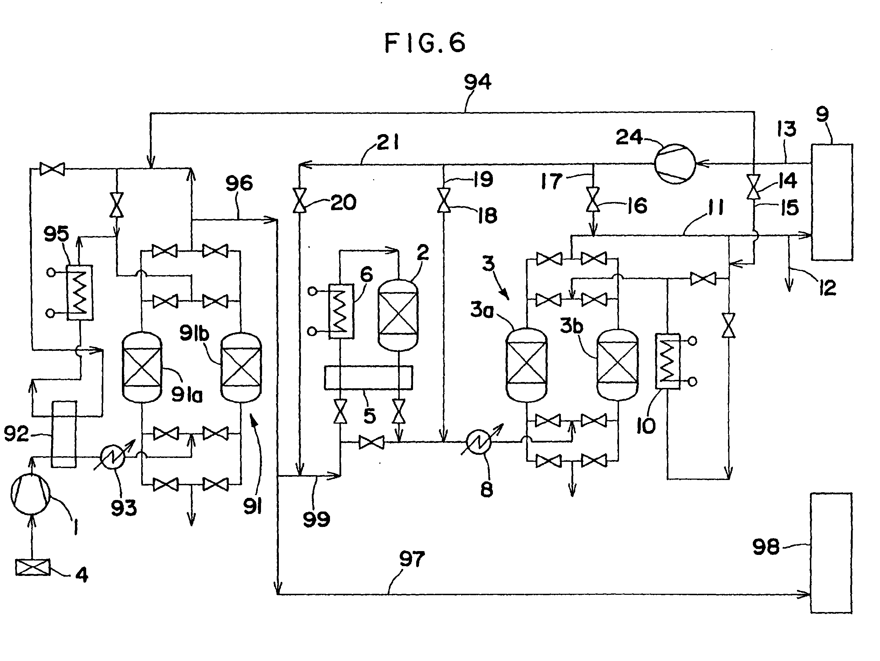

Fig. 6 is a system diagram showing a process and an apparatus for producing clean dry air according to a fourth embodiment of the present invention. This apparatus for producing clean dry air is provided with a pre-purification unit 91 interposed between the compressor 1 and the catalytic purification unit 2. This pre-purification unit 91 removes the moisture contained in the raw air.

The raw air compressed in the compressor 1 is introduced to a heat exchanger 92 where it is subjected to heat exchange with the used clean dry air recovered from the air-consuming equipment 9 to be cooled, and then is introduced into a pre-cooling unit 93. As this pre-cooling unit 93, there is employed a unit of the type which cools the compressed raw air to 5°C to ambient temperature with a water cooler and, after introduction of the thus treated raw air to a drain separator (not shown) where condensate is removed. That is, the running efficiency of the pre-purification unit 91 is designed to be increased by removing the moisture contained in the compressed raw air as much as possible and reducing the water content to be carried over into the pre-purification unit 91. The lower is the cooling temperature in the water cooler, the larger becomes the quantity of drainage and the lower becomes the load to be applied to the pre-purification unit 91. However, when the pre-purification unit 91 is an adsorber, the pre-purification unit 91 can be operated within the above temperature range in normal operation of the apparatus.

As the pre-purification unit 91, an adsorber or a membrane separator is generally used, and this unit 91 is a so-called dessicator which separates the moisture in the raw air to lower the dew point to -30°C or lower. Incidentally, it is also possible to use as the pre-purification unit 91 a cryogenic separation dessicator utilizing a water-removing heat exchanger, a condensing purifier or a cold-drying heat exchanger.

As the membrane separator, those of polyvinyl chloride, fluoropolymers (trade name: Teflon, fluororesin; etc.), cellulose esters (e.g., cellulose acetate), polyamides, polysulfones and polyimides.

The ordinary step of pre-purification to be carried out using the pre-purification unit 91 employs a plurality of, for example, two adsorption columns 91a and 91b which are operated interchangeably. As the adsorption column, there is generally employed a vertical cylinder packed with silica gel, alumina gel, Ca-A zeolite, Na-A zeolite, Ca-X zeolite or K-A zeolite (trade name: Molecular Sieves 5A, 4A 10X and 3A) singly or with a combination of two or more kinds selected from them.

The pre-purification step by means of the adsorptive purification as described above is carried out with a space velocity of 12000 h⁻¹ or less, preferably 9000 to 10000 h⁻¹. A high space velocity can prevent full removal of moisture. In the case where these two adsorption columns 91a and 91b are operated interchangeably, the adsorption column 91b is in the regeneration step when the adsorption column 91a is in the adsorption step, and the regeneration step includes a heat-regeneration sub-step and a cooling sub-step.

While the clean dry air used in the air-consuming equipment 9, passed through the recovering passage 13 and diverged into a regeneration gas passage 94 is basically used as the regeneration gas in the heat-regeneration sub-step and the cooling sub-step in the regeneration step, use of moisture-free exhaust gas from other processes, for example, an exhaust gas from an air separation plant, obviates consumption of the product gas to improve the efficiency of producing the product gas. As the heating gas to be used in the heat-regeneration sub-step, there is used the above regeneration gas heated by subjecting it to heat exchange in the heat exchanger 92 with the compressed raw air heated by the heat of compression in the compressor 1 and by recovering the quantity of heat of the compressed raw air.

The regeneration temperature is usually about 100 to 150°C. However, if the compressed raw air has insufficient quantity of heat, it is heated to a predetermined temperature by a heater 95 or by other heat sources before introduction into the adsorption column. Since this regeneration temperature varies depending on the regeneration period, the quantity of the regeneration gas, etc., the balance among the conditions for operating the process should be taken into consideration if an exhaust gas from another process is used.

The dry air obtained by carrying out a pre-purification step in the pre-purification unit 91 passes through a passage 96 and is diverged partly to a passage 97. The thus diverged dry air is supplied to a dry air-consuming equipment 98 in a semiconductor manufacturing plant, a liquid crystal manufacturing plant and the like. Meanwhile, the rest of the dry air is introduced through a passage 99 into the catalytic purification unit 2 and then to the adsorptive purification unit 3 to be converted to clean dry air. This clean dry air is supplied through the supply passage 11 to a clean dry air-consuming equipment 9 of a semiconductor manufacturing plant, a high-density recording medium manufacturing plant, a liquid crystal manufacturing plant, a solar-cell panel manufacturing plant, etc.

In this embodiment, since the moisture in the raw air is removed in the pre-purification step, the fill of the catalyst and that of the adsorbent can be reduced. For example, the fill of the catalyst is preferably at least 0.033 ℓ/unit amount of air, particularly at least 0.4 ℓ/unit amount of air. Meanwhile, the space velocity in the catalytic purification step is preferably not more than 30000 h⁻¹, particularly 2000 to 30000 h⁻¹. A higher space velocity can prevent the reaction from taking place sufficiently.

The fill of the adsorbent is preferably at least 0.14 ℓ/unit amount of air, particularly at least 0.2 ℓ/unit amount of air. The space velocity in the adsorptive purification step is preferably not more than 7000 h⁻¹, particularly 4000 to 6000 h⁻¹.

According to this embodiment, clean dry air and general dry air can be supplied stably and economically.

### Example 1

A clean dry air producing apparatus was fabricated having the constitution of the first embodiment as shown in Fig. 1 and producing clean dry air at a rate of 4000 Nm³/h. Operating conditions of the apparatus are as follows:

| | | |
|---|---|---|
| Air compressor | Quantity of air to be treated | 5000 Nm³/h |
| | Outlet pressure | 0.75 Mpa |
| Catalytic purification unit | Operating temp. | 150°C |
| | Amount of catalyst | 2000 ℓ |
| | Space velocity | 2500 h⁻¹ |
| Adsorptive purification unit | Inlet temp. | 10°C |
| | Switching time | 8 hrs. |
| | Regeneration temp. | 120°C |
| | Alumina gel | 500 ℓ |
| | Space velocity | 10000 h⁻¹ |
| | Synthetic zeolite | 1000ℓ |
| | Space velocity | 5000 h⁻¹ |
| | Regeneration gas | Purified gas product |
| | Amount of regeneration gas | 1000 Nm³/h |
| Clean dry air | Product quantity | 4000 Nm³/h |
| | Pressure | 0.7 MPa |

Clean dry air was produced continuously at a rate of 4000 Nm³/h under the above conditions to determine impurity contents in the product every 15 minutes continually for 7000 minutes, and mean values are as shown below:

| Impurity content | Concentration [ppb] |
|---|---|
| Moisture | 2.6 |
| Carbon dioxide | 2.9 |
| Carbon monoxide | 5.1 |
| Hydrogen | 1.3 |

When the apparatus was operated under the above operating conditions, it was confirmed that the moisture, carbon dioxide, carbon monoxide and hydrogen contained in the clean dry air product were all removed to 10 ppb or less and that the product was purified so sufficiently as can be employed as a gas for protecting wafers.

### Example 2

An apparatus having the constitution of the second embodiment as shown in Fig. 2 was compared with a conventional clean dry air producing apparatus in terms of power consumption cost when low-pressure clean dry air is produced at a rate of 4000 Nm³/h. Operation parameters and power consumption ratio of these two apparatuses are shown in Table 1.

**Table 1**

| Operation parameter | Apparatus of the second embodiment | Apparatus of the prior art |
|---|---|---|
| Amount of raw air | 5500Nm³/h | 5500Nm³/h |
| Outlet pressure of air compressor | 0.25 MPa | 0.46 MPa |
| Outlet pressure of power recycling unit | 0.46 MPa | - |
| Inlet pressure of adsorptive purification unit | 0.44 MPa | 0.44 MPa |
| Outlet pressure of adsorptive purification unit | 0.43 MPa | 0.43 MPa |
| Inlet pressure of expansion turbine | 0.42 MPa | - |
| Clean dry air supply pressure | 0.1 MPa | 0.43 MPa |
| Clean dry air temperature | 25°C | 10°C |
| Clean dry air supply flow rate | 4000 Nm³/h | 4000 Nm³/h |
| Power consumption ratio | 0.73 | 1.00 |

### Example 3

In the recycling system 53 shown in Fig. 4, the quantity of circulating air in the passage 69 was determined, when a replenishing clean dry air with 0.45 MPa was supplied at a rate of 1800 Nm³/h to the expansion turbine 51 and was expanded there to 160 mmAq and the pressure of the circulating clean dry air was boosted from 120 mmAq to 160 mmAq.

As a result, the quantity of the circulating air was 5300 Nm³/h. This means that the clean dry air exhausted from the air-consuming equipment 9 was recovered and recycled in an amount of 3500 Nm³/h when the amount of the replenishing clean dry air is deducted from the above value. Both the inlet moisture content and the outlet moisture content in the recycling system 53 were 3ppb, and thus it was confirmed that the clean dry air was not contaminated by the treatment in the recycling system 53. According to this example, a circulating clean dry air can be treated in an amount of twice as much as that of the replenishing clean dry air, and the recovery or reutilization was about 66 %.

### Example 4

In the recycling system 53 shown in Fig. 5, the quantity of circulating air in the passage 83 was determined, when a replenishing clean dry air with 0.45 MPa was supplied at a flow rate of 1800 Nm³/h to the expansion turbine 51 and was expanded there to 160 mmAq and the pressure of the circulating clean dry air was increased from 120 mmAq to 160 mmAq.

As a result, the quantity of the circulating air was 148000 Nm³/h. This means that the clean dry air exhausted from the air-consuming equipment 9 was recovered and recycled in an amount of 146200 Nm³/h when the amount of the replenishing clean dry air is deducted from the above value. Both the inlet moisture content and the outlet moisture content in the recycling system 53 were 3 ppb, and thus it was confirmed that the clean dry air was not contaminated by the treatment in the recycling system 53. According to this example, a circulating clean dry air can be treated in an amount of 80 times as much as that of the replenishing clean dry air, the recovery or reutilization is about 99 %.

## Claims

1. A process for producing a clean dry air comprising:
a compressing step for compressing a raw air;
a catalytic purification step for reacting hydrogen and carbon monoxide contained in the raw air with oxygen; and
an adsorptive purification step for removing impurities including moisture, carbon dioxide, etc. contained in the raw air;
wherein the catalytic purification step is carried out at a space velocity of 3000 h⁻¹ or less; the adsorptive purification step is carried out by passing the raw air through a drying agent bed and an impurity gas removing agent bed packed in this order in the raw air flow direction; space velocity of the drying agent bed and that of the impurity gas removing agent bed being 11000 h⁻¹ or less and 6000 h⁻¹ or less respectively.

2. The process for producing a clean dry air according to Claim 1, wherein the adsorptive purification step is carried out using at least two adsorbers interchangeably with a switching time of 4 to 12 hours, at a regeneration temperature of 100°C or higher and with a regeneration gas ratio of 40 % or less.

3. The process for producing a clean dry air according to Claim 1, wherein the clean dry air gone through the adsorptive purification step is supplied as a product to an air-consuming equipment; whereas the clean dry air used in the equipment is recovered and boosted to be combined with an air stream on the upstream side or downstream side of the compression step.

4. The process for producing a clean dry air according to Claim 1, wherein the clean dry air gone through the adsorptive purification step is supplied as a product to an air-consuming equipment; whereas the clean dry air used in the equipment is recovered and boosted to be combined with an air stream on the upstream side or downstream side of the adsorptive purification step.

5. The process for producing a clean dry air according to Claim 1, wherein the clean dry air gone through the adsorptive purification step is expanded at least partly to effect further boosting of the raw air after the compressing step with the energy of expansion.

6. The process for producing a clean dry air according to Claim 1, wherein the clean dry air gone through the adsorptive purification step is supplied as a product to an air-consuming equipment and is used there, and then the clean dry air is recovered and recycled to the air-consuming equipment utilizing the pressure of the clean dry air to be supplied afresh to the equipment.

7. The process for producing a clean dry air according to Claim 6, wherein the clean dry air to be supplied afresh is expanded in a fan-driving expansion turbine; whereas the clean dry air recovered after use in the equipment is compressed by a fan driven by the expansion turbine.

8. The process for producing a clean dry air according to Claim 7, wherein the clean dry air to be supplied afresh is partly supplied as a seal gas to shaft sealing equipments of the expansion turbine and the fan against the ambient air.

9. The process for producing a clean dry air according to Claim 1, wherein a pre-purification step for removing moisture in the raw air is interposed between the compressing step and the catalytic purification step; a part of air stream having gone through the pre-purification step is as necessary supplied as a dry air product.

10. The process for producing a clean dry air according to Claim 9, wherein the pre-purification step is directed to removing moisture by adsorption and is carried out at a space velocity of 12000 h⁻¹ or less.

11. An apparatus for producing a clean dry air comprising:
a compressor for compressing a raw air;
a catalytic purification unit for reacting hydrogen and carbon monoxide contained in the raw air with oxygen; and
an adsorptive purification unit for removing impurities contained in the raw air including moisture and carbon dioxide;
the catalytic purification unit being packed with a metal catalyst containing as a major component a metal or a combination of metals selected from Pd, Pt, Au, Rh, Ru, Fe, Cr, Ni, Co, Mn, Cu, Sn and Zn, or an alloy formed by combining some of such metals; the adsorptive purification unit containing a drying agent layer formed by packing a drying agent containing activated alumina and/or silica gel, and an impurity gas removing agent bed formed by packing a synthetic zeolite; these two beds being multilayered in this order from the inlet side.

12. The apparatus for producing a clean dry air according to Claim 11, wherein the metal catalyst, the drying agent and the synthetic zeolite are packed in amounts of 0.33 ℓ or more per unit amount of air, 0.09 ℓ or more per unit amount of air and 0.14 ℓ or more per unit amount of air, respectively.

13. The apparatus for producing a clean dry air according to Claim 11, provided with a heat exchanger for effecting heat exchange between the raw air withdrawn from the catalytic purification unit and at least a part of the clean dry air withdrawn from the adsorptive purification unit.

14. The apparatus for producing a clean dry air according to Claim 11, provided with a booster-driving expansion turbine for expanding at least a part of the clean dry air withdrawn from the adsorptive purification unit and a booster attached coaxially to the expansion turbine, for further boosting the raw air compressed in the compressor.

15. The apparatus for producing a clean dry air according to Claim 14, provided with a heat exchanger for effecting heat exchange between the low-pressure clean dry air withdrawn from the expansion turbine and the raw air withdrawn from the catalytic purification unit.

16. The apparatus for producing a clean dry air according to Claim 14, provided with a by-pass line having a by-pass valve positioned between a charge passage and a discharge passage of the expansion turbine.

17. The apparatus for producing a clean dry air according to Claim 11, provided with a fan-driving expansion turbine for expanding the clean dry air withdrawn from the adsorptive purification unit and supplying the expanded clean dry air as a low-pressure product to an air-consuming equipment and a fan attached coaxially to the turbine, for compressing the clean dry air used in the air-consuming equipment and recovered therefrom and recycling the resulting air to the air-consuming equipment.

18. The apparatus for producing a clean dry air according to Claim 11, provided with a pre-purification unit for removing moisture contained in the raw air, interposed between the compressor and the catalytic purification unit.

19. The apparatus for producing a clean dry air according to Claim 18, wherein the pre-purification unit is a membrane separator.

20. The apparatus for producing a clean dry air according to Claim 18, wherein the pre-purification unit is packed with at least one kind selected from alumina gel, silica gel and zeolite.
